(19) **Europäisches Patentamt**
**European Patent Office**
**Office européen des brevets**

(11) **EP 3 935 419 B1**

(12) **EUROPEAN PATENT SPECIFICATION**

(45) Date of publication and mention
of the grant of the patent:
**01.11.2023 Bulletin 2023/44**

(21) Application number: **20708182.9**

(22) Date of filing: **12.02.2020**

(51) International Patent Classification (IPC):
**G01V 1/36** *(2006.01)*    **G01V 1/42** *(2006.01)*
**G06N 3/02** *(2006.01)*    **E21B 47/00** *(2012.01)*

(52) Cooperative Patent Classification (CPC):
**G01V 1/42; G01V 1/364; G06N 3/045; G06N 3/08;**
G01V 2210/38

(86) International application number:
**PCT/IB2020/051127**

(87) International publication number:
**WO 2020/178648 (10.09.2020 Gazette 2020/37)**

(54) **SYSTEM AND METHOD FOR REDUCING NOISE IN DISTRIBUTED ACOUSTIC SENSING DATA**

SYSTEM UND VERFAHREN ZUR REDUZIERUNG VON RAUSCHEN IN DATEN VON VERTEILTEN AKUSTISCHEN SENSOREN

SYSTÈME ET PROCÉDÉ POUR LA RÉDUCTION DE BRUIT DANS DES DONNÉES D'UN RÉSEAU DE CAPTEURS ACOUSTIQUES DISTRIBUÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.03.2019 US 201916291912**

(43) Date of publication of application:
**12.01.2022 Bulletin 2022/02**

(73) Proprietor: **Chevron U.S.A. Inc.**
**San Ramon, California 94583-0806 (US)**

(72) Inventor: **ZHANG, Lin**
**San Ramon, California 94583 (US)**

(74) Representative: **Haseltine Lake Kempner LLP**
**One Portwall Square**
**Portwall Lane**
**Bristol BS1 6BH (GB)**

(56) References cited:
**US-A1- 2020 217 979**

- **MARTIN EILEEN R ET AL: "A Seismic Shift in Scalable Acquisition Demands New Processing: Fiber-Optic Seismic Signal Retrieval in Urban Areas with Unsupervised Learning for Coherent Noise Removal", IEEE SIGNAL PROCESSING MAGAZINE, IEEE SERVICE CENTER, PISCATAWAY, NJ, US, vol. 35, no. 2, 1 March 2018 (2018-03-01), pages 31-40, XP011678850, ISSN: 1053-5888, DOI: 10.1109/MSP.2017.2783381 [retrieved on 2018-03-08]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The disclosed embodiments relate generally to techniques for displaying seismic events in subsurface reservoirs recorded by a Distributed Acoustic Sensing (DAS) system and, in particular, to a method of attenuating random noise in the DAS seismic data in order to make it possible to display the seismic events. Reference may be made to "MARTIN EILEEN R ET AL: "A Seismic Shift in Scalable Acquisition Demands New Processing: Fiber-Optic Seismic Signal Retrieval in Urban Areas with Unsupervised Learning for Coherent Noise Removal",IEEE SIGNAL PROCESSING MAGAZINE, IEEE SERVICE CENTER, PISCATAWAY, NJ, US,vol. 35, no. 2, 1 March 2018 (2018-03-01), pages 31-40, which relates to a case study illustrating the use of data from a fiber-optic array in existing telecommunications conduits. The study performs cross correlations of strain-rate measurements of the ambient wavefield to extract signals that mimic the response of the array to virtual active seismic sources at any receiver location.

BACKGROUND

Seismic exploration involves surveying subterranean geological media for hydrocarbon deposits. A survey typically involves deploying seismic sources and seismic sensors at predetermined locations. The sources generate seismic waves, which propagate into the geological medium creating pressure changes and vibrations. Variations in physical properties of the geological medium give rise to changes in certain properties of the seismic waves, such as their direction of propagation and other properties. Alternatively, rather than having active seismic sources to generate seismic waves, a passive seismic survey may use ambient seismic sources such as but not limited to earthquakes, rock fracturing, and/or environmental sources (e.g., vehicle traffic, ocean waves, and the like).

Portions of the seismic waves reach the seismic sensors. Some seismic sensors are sensitive to pressure changes (e.g., hydrophones), others to particle motion (e.g., geophones), and industrial surveys may deploy one type of sensor or both. In response to the detected seismic waves, the sensors generate corresponding electrical signals, known as traces, and record them in storage media as seismic data. Seismic data will include a plurality of "shots" (individual instances of the seismic source being activated), each of which are associated with a plurality of traces recorded at the plurality of sensors.

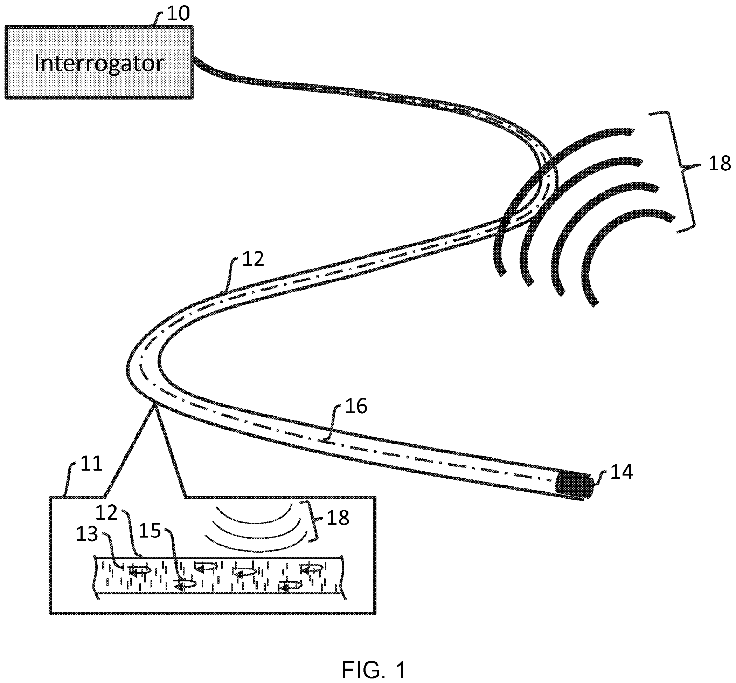

An alternative seismic sensor may include fiber-optic cables. Fiber-optic cables may be deployed in a borehole drilled through the earth's subsurface, along the earth's surface, or on a seabed. Figure 1 illustrates a fiber-optic cable 12 attached to an interrogator 10. A laser pulse 14 propagates through the fiber-optic cable 12, shown as light stream 16. The light stream 16 sends information to interrogator 10. However, as observed in the enlarged view 11, the fiber-optic cable 12 contains many impurities 13 which cause back-scattering 15. This back-scattering 15 will be recorded as random noise. Meanwhile, if an acoustic signal 18 encounters the fiber-optic cable 12, this may be recorded as a seismic event but the signal will be negatively impacted by the back-scattering 15.

There exists a need for attenuating noise recorded by the DAS system so that recorded seismic events can be detected and displayed.

SUMMARY

The present invention is defined by the appended independent claims to which reference should now be made. Specific embodiments are defined in the dependent claims.

In another aspect of the present invention, to address the aforementioned problems, some embodiments provide a non-transitory computer readable storage medium storing one or more programs. The one or more programs comprise instructions, which when executed by a computer system with one or more processors and memory, cause the computer system to perform any of the methods provided herein.

In yet another aspect of the present invention, to address the aforementioned problems, some embodiments provide a computer system. The computer system includes one or more processors, memory, and one or more programs. The one or more programs are stored in memory and configured to be executed by the one or more processors. The one or more programs include an operating system and instructions that when executed by the one or more processors cause the computer system to perform any of the methods provided herein.

BRIEF DESCRIPTION OF THE DRAWINGS

Figure 1 illustrates a distributed acoustic sensing (DAS) seismic recording system;

Figure 2 illustrates a prior art method of attenuating random noise in a DAS seismic dataset;

Figure 3 is an example of DAS seismic data;

Figure 4 illustrates a basic embodiment of the present invention;

Figure 5A illustrates a particular embodiment of the present invention;

Figure 5B illustrates another embodiment of the present invention;

Figure 6 illustrates the result of an embodiment of the present invention; and

Figure 7 is a block diagram illustrating a seismic processing system, in accordance with some embodiments.

Like reference numerals refer to corresponding parts throughout the drawings.

DETAILED DESCRIPTION OF EMBODIMENTS

Described below are methods, systems, and computer readable storage media that provide a manner of DAS seismic processing. These embodiments are designed to be of particular use for attenuating random noise in DAS seismic datasets.

Reference will now be made in detail to various embodiments, examples of which are illustrated in the accompanying drawings. In the following detailed description, numerous specific details are set forth in order to provide a thorough understanding of the present disclosure and the embodiments described herein. However, embodiments described herein may be practiced without these specific details. In other instances, well-known methods, procedures, components, and mechanical apparatus have not been described in detail so as not to unnecessarily obscure aspects of the embodiments.

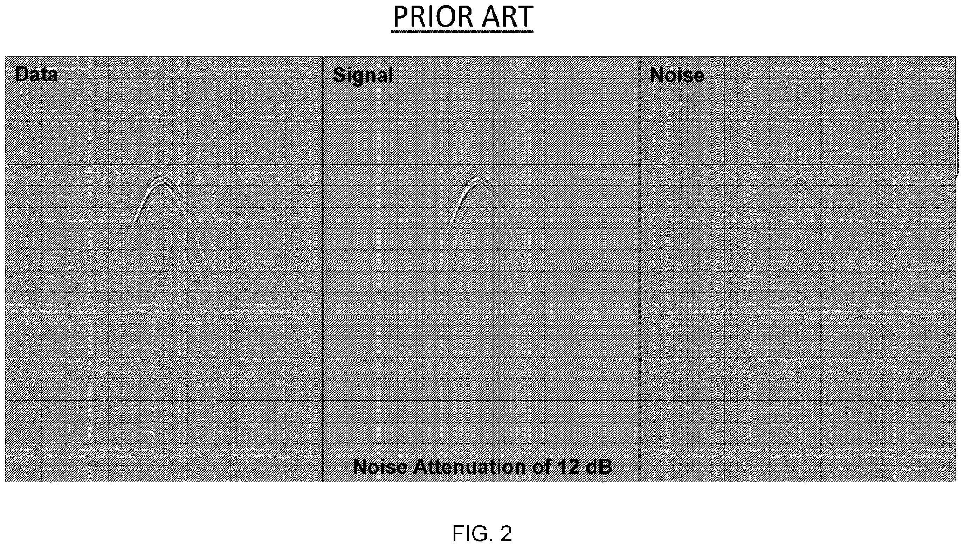

The present invention includes embodiments of a method and system for processing DAS seismic data. The DAS seismic data may contain seismic events that are caused by active seismic sources or by passive seismic sources. In practice, DAS seismic data contains a significant amount of random noise, likely due to impurities in the fiber-optic cable and/or interrogator. This random noise can obscure the seismic signal. For example, in Figure 2 the "Data" panel shows a shot gather containing seismic signal and random noise. Conventional methods for noise attenuation, such as FX-deconvolution, may reduce random noise, as seen in the "Signal" panel of Figure 2, but are also likely to negatively impact the seismic signal. This can be seen in the "Noise" panel of Figure 2 in which a hyperbolic feature that is clearly part of the signal has been incorrectly identified as noise. This conventional method of noise attenuation has not removed all of the random noise from die "Signal" panel and has changed the amplitude of the seismic event by classifying part of the signal as noise (seen in the "Noise" panel). The present invention overcomes this problem.

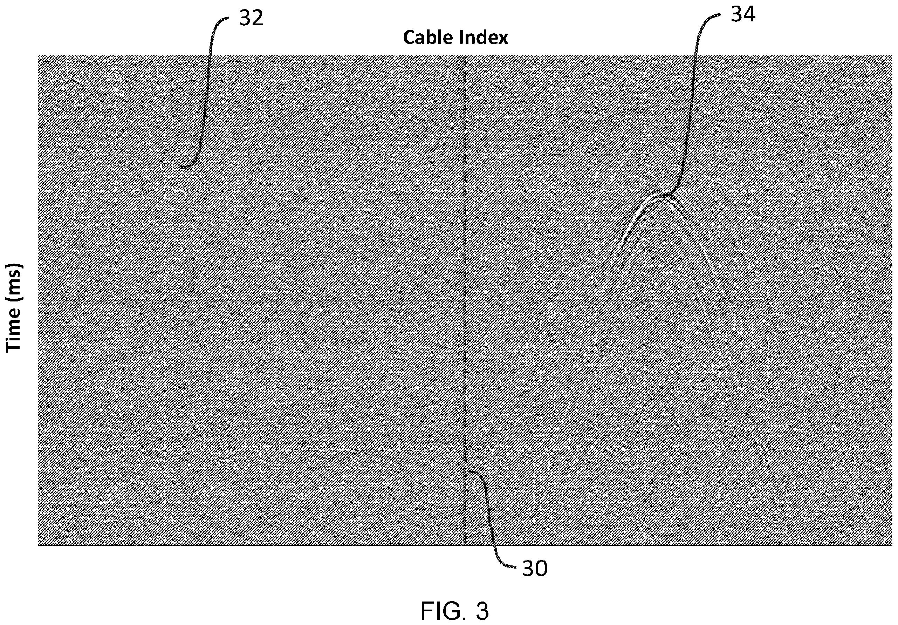

The method for noise attenuation described herein takes DAS seismic data as input. DAS seismic data is recorded by a system such as that shown in Figure 1. The fiber-optic cable may, in one embodiment, be located in a borehole that is drilled through a subsurface volume of interest, such as a rock formation containing a hydrocarbon reservoir. The borehole may be vertical, horizontal, or a combination of both. The DAS seismic data may be acquired as part of a passive seismic survey, such as microseismic data which records acoustic waves that are generated by rock fracturing, or as part of an active seismic survey, such as a walk-away vertical seismic profile (WVSP) using active seismic sources at the earth's surface or, for a marine survey, in the water column. Figure 3 is an example of a portion of a microseismic DAS seismic dataset. In this example, part of the fiber-optic cable was in the vertical section of a borehole (left of the vertical dashed line 30) and part of the fiber-optic cable was in the horizontal section of the cable (right of the vertical dashed line 30). As can be seen, the data on the left of vertical dashed line 30 consists only of random noise 32. This random noise also exists right of the vertical dashed line 30 but here there is also a seismic event 34 which is partially obscured by the random noise. In this example, the seismic event is still visible to the human eye but it should be understood that in many cases there may be seismic signal in the data that is of a similar amplitude (i.e. strength) as the random noise so it will be almost indiscernible.

The DAS seismic data may be described as $d(t, x)$ where $t$ is time and $x$ is the cable index (i.e. location along the fiber-optic cable):

$$d(t, x) = s(t, x) + n(t, x) \qquad (1)$$

where $s(t, x)$ is the seismic signal and $n(t, x)$ is the random noise. As is common in signal processing, it is helpful to deal with the data in the frequency domain. Given $D(\omega,k), S(\omega,k)$, and $N(\omega,k)$ as the Fourier spectra of $d(t, x)$, $s(t, x)$, and $n(t, x)$ respectively, with temporal frequency $\omega$ and wavenumber $k$, equation (1) becomes:

$$D(\omega, k) = S(\omega, k) + N(\omega, k). \qquad (2)$$

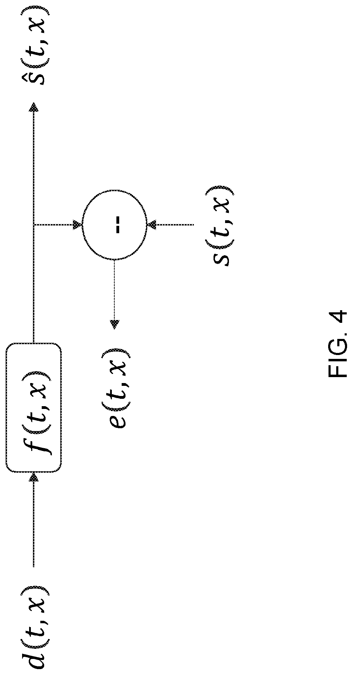

A means to separate the seismic signal $s(t, x)$ from the seismic data $d(t, x)$ is illustrated in Figure 4. Here there is a linear filter $f(t, x)$ that can be applied to $d(t, x)$ that will produce an estimated seismic signal $\hat{s}(t, x)$. The mean square error between the estimated seismic signal $\hat{s}(t, x)$ and the seismic signal $s(t, x)$ is $e(t, x)$. It is desirable to find an optimal filter $f_{opt}(t, x)$ that minimizes the mean square error $e(t, x)$. Note that $e(t, x)$ is the mean square error between the estimated seismic signal $\hat{s}(t, x)$ and the seismic signal $s(t, x)$ rather than a simple difference due to the need to accommodate the positive and negative amplitude values recorded for the data. In the frequency domain, the optimal filter $F_{opt}(\omega, k)$ is found by minimizing:

$$\int_{-\infty}^{\infty} |E(\omega, k)|^2 d\omega = \int_{-\infty}^{\infty} |F_{opt}(\omega, k)D(\omega, k) - S(\omega, k)|^2 d\omega \qquad (3)$$

where $E(\omega, k)$ is the Fourier spectrum of $e(t, x)$.

Many potential candidates for $F_{opt}(\omega, k)$ exist. In the case of DAS seismic data, it may be assumed that the seismic signal is deterministic and varying along the time and space (i.e. cable index) axes. On the other hand, the random noise is stochastic and weakly stationary. This means that the seismic signal and the random noise are statistically independent. As such, the power spectrum of the seismic data $d(t, x)$ is

$$\Phi_d(\omega, k) = \Phi_s(\omega, k) + \Phi_n(\omega, k) \qquad (4)$$

where $\Phi_s(\omega, k)$ and $\Phi_n(\omega, k)$ are the power spectra of the seismic signal $s(t, x)$ and random noise $n(t, x)$ respectively. Based on this, it is possible to define the optimal filter $F_{opt}(\omega, k)$ as a Wiener filter:

$$F_{opt}(\omega, k) = \frac{\Phi_s(\omega, k)}{\Phi_s(\omega, k) + \Phi_n(\omega, k)}$$

$$(5)$$

Since the random noise $n(t, x)$ is weakly stationary, its power spectrum can be estimated by the spectra of moving windows of recorded noise:

$$\Phi_n(\omega, k) \approx E(|N_i(\omega, k)|^2), \qquad (6)$$

where i is window index and $N_i(\omega, k)$ is the Fourier spectrum of windowed noise $n_i(t, x)$. On the other hand, the seismic signal $s(t, x)$ is temporally and spatially varying so its power spectrum needs to be estimated from Fourier spectra of recorded data,

$$|S(\omega, k)|^2 \approx |D(\omega, k)|^2 - \Phi_n(\omega, k), \qquad (7)$$

where $D(\omega, k)$ is the Fourier spectrum of windowed data $d(t, x)$.

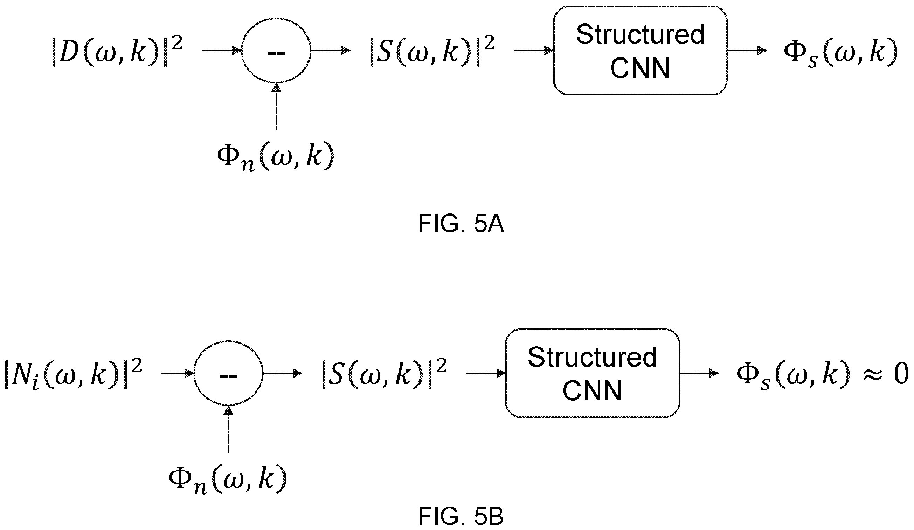

Based on equation (7), it is possible to design a structured Convolutional Neural Network (CNN) to estimate the power spectrum of the signal, as shown in Figure 5A. For this structured CNN, it is necessary to train it on the power spectra of random noise $N_i(\omega, k)$ as shown in Figure 5B which is possible because, as shown in Figure 3, DAS seismic data contains regions that contain only the random noise inherent in the system. Anything that the structured CNN does not identify as being random noise is assumed to be seismic signal.

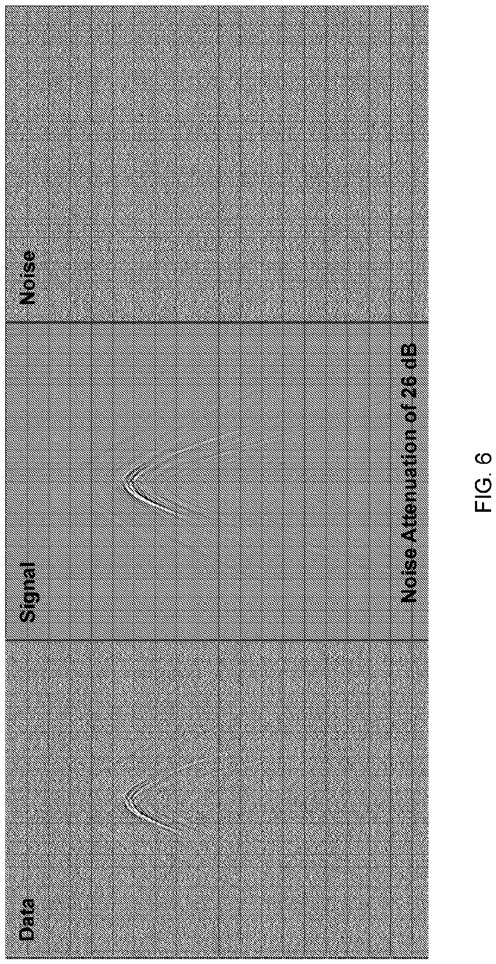

Figure 6 shows the result of an embodiment of the present invention. The "Data" panel in Figure 6 is the same as that in Figure 2. The seismic signal is visible but partially obscured by the random noise. After performing the operations shown in Figures 5A and 5B, Figure 6 shows the results in the "Signal" panel and the "Noise" panel. Again comparing this with the results of a conventional noise attenuation process in Figure 2, the "Signal" panel is much cleaner with no visible noise. In this example, the noise has been attenuated by 26 dB compared with the conventional method's noise attenuation of only 12 dB. Comparing the "Noise" panel of Figure 6 with that of Figure 2, the noise identified by the present invention does not have any signal energy in it, as the conventional method erroneously did. The present invention attenuates the random noise much better than the conventional method without damaging the signal.

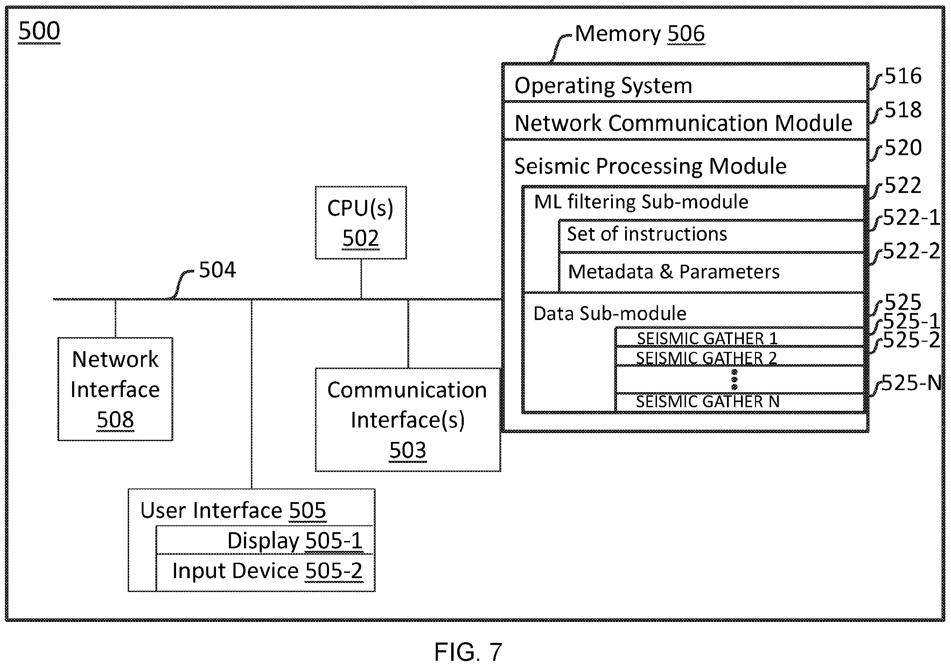

Figure 7 is a block diagram illustrating a DAS seismic system 500, in accordance with some embodiments. While certain specific features are illustrated, those skilled in the art will appreciate from the present disclosure that various other features have not been illustrated for the sake of brevity and so as not to obscure more pertinent aspects of the embodiments disclosed herein.

To that end, the DAS seismic system 500 includes one or more processing units (CPUs) 502, one or more network interfaces 508 and/or other communications interfaces 503, memory 506, and one or more communication buses 504 for interconnecting these and various other components. The DAS seismic system 500 also includes a user interface 505 (e.g., a display 505-1 and an input device 505-2). The communication buses 504 may include circuitry (sometimes called a chipset) that interconnects and controls communications between system components. Memory 506 includes high-speed random access memory, such as DRAM, SRAM, DDR RAM or other random access solid state memory devices; and may include non-volatile memory, such as one or more magnetic disk storage devices, optical disk storage devices, flash memory devices, or other non-volatile solid state storage devices. Memory 506 may optionally include one or more storage devices remotely located from the CPUs 502. Memory 506, including the non-volatile and volatile memory devices within memory 506, comprises a non-transitory computer readable storage medium and may store seismic data, velocity models, seismic images, and/or geologic structure information.

In some embodiments, memory 506 or the non-transitory computer readable storage medium of memory 506 stores the following programs, modules and data structures, or a subset thereof including an operating system 516, a network communication module 518, and a seismic processing module 520.

The operating system 516 includes procedures for handling various basic system services and for performing hardware dependent tasks.

The network communication module 518 facilitates communication with other devices via the communication network interfaces 508 (wired or wireless) and one or more communication networks, such as the Internet, other wide area networks, local area networks, metropolitan area networks, and so on.

In some embodiments, the seismic processing module 520 executes the processes described herein. Seismic processing module 520 may include data sub-module 525, which handles the seismic dataset including seismic gathers 525-1 through 525-N. This seismic data is supplied by data sub-module 525 to other sub-modules.

ML filtering sub-module 522 contains a set of instructions 522-1 and accepts metadata and parameters 522-2 that will enable it to execute the machine-learning noise attenuation processes described herein. Although specific operations have been identified for the sub-modules discussed herein, this is not meant to be limiting. Each sub-module may be configured to execute operations identified as being a part of other sub-modules, and may contain other instructions, metadata, and parameters that allow it to execute other operations of use in processing seismic data and generate the seismic image. For example, any of the sub-modules may optionally be able to generate a display that would be sent to and shown on the user interface display 505-1. In addition, any of the seismic data or processed seismic data products may be transmitted via the communication interface(s) 503 or the network interface 508 and may be stored in memory 506.

The method is, optionally, governed by instructions that are stored in computer memory or a non-transitory computer readable storage medium (e.g., memory 506 in Figure 7) and are executed by one or more processors (e.g., processors 502) of one or more computer systems. The computer readable storage medium may include a magnetic or optical disk storage device, solid state storage devices such as flash memory, or other non-volatile memory device or devices. The computer readable instructions stored on the computer readable storage medium may include one or more of source code, assembly language code, object code, or another instruction format that is interpreted by one or more processors. In various embodiments, some operations in each method may be combined and/or the order of some operations may be changed from the order shown in the figures. For ease of explanation, the method is described as being performed by a computer system, although in some embodiments, various operations of the method are distributed across separate computer systems.

While particular embodiments are described above, it will be understood it is not intended to limit the invention to these particular embodiments. On the contrary, the invention includes alternatives, modifications and equivalents that are within the scope of the appended claims. Numerous specific details are set forth in order to provide a thorough understanding of the subject matter presented herein. But it will be apparent to one of ordinary skill in the art that the subject matter may be practiced without these specific details. In other instances, well-known methods, procedures, components, and circuits have not been described in detail so as not to unnecessarily obscure aspects of the embodiments.

The terminology used in the description of the invention herein is for the purpose of describing particular embodiments only and is not intended to be limiting of the invention. As used in the description of the invention and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, operations, elements, and/or components, but do not preclude the presence or addition of one or more other features, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on die context.

Although some of the various drawings illustrate a number of logical stages in a particular order, stages that are not order dependent may be reordered and other stages may be combined or broken out. While some reordering or other groupings are specifically mentioned, others will be obvious to those of ordinary skill in the art and so do not present an exhaustive list of alternatives. Moreover, it should be recognized that the stages could be implemented in hardware, firmware, software or any combination thereof.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

**Claims**

1. A computer-implemented method of improving distributed acoustic sensing, DAS, seismic data in order to identify seismic events, comprising:

   a. receiving a DAS seismic dataset recorded by a fiber-optic cable (12) in a borehole drilled through a subsurface volume of interest, the DAS seismic dataset comprising a seismic signal and random noise;
   b. identifying a portion of the DAS seismic dataset including random noise (32) with no seismic signal (34) to generate a windowed noise dataset;
   c. transforming the windowed noise dataset into a noise power spectrum;
   d. training a machine-learning algorithm using the noise power spectrum to estimate a power spectrum of the seismic signal (34) as approximately zero based on the windowed noise dataset whereby the trained machine-learning algorithm implements a Wiener filter; and
   e. using the trained machine-learning algorithm to estimate a power spectrum of the seismic signal (34) based on the DAS seismic dataset, the power spectrum of the seismic signal estimated based on the DAS seismic dataset being a power spectrum of a noise-attenuated seismic dataset for use in identifying the seismic events.

2. The method of claim 1 wherein the machine-learning algorithm is a structured convolutional neural network.

3. A computer system (500), comprising:

   one or more processors (502); and
   memory (506);
   wherein one or more programs are stored in the memory (506) and configured to be executed by the one or more processors (502), the one or more programs including instructions that when executed by the one or more processors (502) cause the system (500) to carry out the method of claim 1 or 2.

4. One or more programs comprising instructions which, when executed by an electronic device with one or more processors (502) and memory (506), cause the device to carry out the method of claim 1 or 2.

5. A non-transitory computer readable storage medium storing the one or more programs of claim 4.

**Patentansprüche**

1. Computerimplementiertes Verfahren zum Verbessern seismischer Daten von verteilten akustischen Sensoren, DAS, zur Identifikation seismischer Ereignisse, umfassend:

   a. Empfangen eines DAS-Seismikdatensatzes, aufgezeichnet durch ein Lichtleitkabel (12) in einem durch ein unterirdisches Volumen von Interesse gebohrten Bohrloch, wobei der DAS-Seismikdatensatz ein seismisches Signal und Zufallsrauschen umfasst;

   b. Identifizieren eines Anteils des DAS-Seismikdatensatzes, der Zufallsrauschen (32) ohne seismisches Signal (34) beinhaltet, um einen gefensterten Rauschdatensatz zu generieren;

   c. Transformieren des gefensterten Rauschdatensatz in ein Rauschleistungsspektrum;

   d. Trainieren eines Maschinenlernalgorithmus unter Verwendung des Rauschleistungsspektrums, um ein Leistungsspektrum des seismischen Signals (34) basierend auf dem gefensterten Rauschdatensatz als näherungsweise null zu schätzen, wobei der trainierte Maschinenlernalgorithmus ein Wiener-Filter implementiert; und

   e. Verwenden des trainierten Maschinenlernalgorithmus zum Schätzen eines Leistungsspektrums des seismischen Signals (34) basierend auf dem DAS-Seismikdatensatz, wobei das basierend auf dem DAS-Seismikdatensatz geschätzte Leistungsspektrum des seismischen Signals ein Leistungsspektrum eines rauschabgeschwächten Seismikdatensatzes zur Verwendung bei der Identifikation seismischer Ereignisse ist.

2. Verfahren nach Anspruch 1, wobei der Maschinenlernalgorithmus ein strukturiertes faltendes neuronales Netz ist.

3. Computersystem (500), das Folgendes umfasst:

   einen oder mehrere Prozessoren (502); und
   einen Speicher (506);
   wobei ein oder mehrere Programme in dem Speicher (506) gespeichert sind und dazu ausgelegt sind, durch den einen oder die mehreren Prozessoren (502) ausgeführt zu werden, wobei das eine oder die mehreren Programme Anweisungen enthalten, die bei Ausführung durch den einen oder die mehreren Prozessoren (502) bewirken, dass das System (500) das Verfahren nach Anspruch 1 oder 2 ausführt.

4. Programm oder Programme, umfassend Anweisungen, die bei Ausführung durch eine elektronische Vorrichtung mit einem oder mehreren Prozessoren (502) und einem Speicher (506) bewirken, dass die Vorrichtung das Verfahren nach Anspruch 1 oder 2 ausführt.

5. Nicht-flüchtiges computerlesbares Speichermedium, das das eine oder die mehreren Programme nach Anspruch 4 speichert.

**Revendications**

1. Procédé mis en œuvre par ordinateur d'amélioration de données sismiques obtenues par détection acoustique distribuée, DAS, afin d'identifier des événements sismiques, comprenant :

   a. la réception d'un ensemble de données sismiques DAS enregistrées au moyen d'un câble à fibre optique (12) dans un puits de forage foré au travers d'un volume d'intérêt en sous-surface, l'ensemble de données sismiques DAS comprenant un signal sismique et un bruit aléatoire ;

   b. l'identification d'une partie de l'ensemble de données sismiques DAS incluant le bruit aléatoire (32) sans signal sismique (34) pour générer un ensemble de données de bruit fenêtrées ;

   c. la transformation de l'ensemble de données de bruit fenêtrées selon un spectre de puissance de bruit ;

   d. la soumission à apprentissage d'un algorithme d'apprentissage automatique en utilisant le spectre de puissance de bruit pour estimer un spectre de puissance du signal sismique (34) comme étant à approximativement zéro sur la base de l'ensemble de données de bruit fenêtrées, l'algorithme d'apprentissage automatique soumis à apprentissage mettant en œuvre un filtre de Wiener ; et

   e. l'utilisation de l'algorithme d'apprentissage automatique soumis à apprentissage pour estimer un spectre de puissance du signal sismique (34) sur la base de l'ensemble de données sismiques DAS, le spectre de puissance du signal sismique étant estimé sur la base du fait que l'ensemble de données sismiques DAS est un spectre de puissance d'un ensemble de données sismiques à bruit atténué pour une utilisation lors de l'identification des événements sismiques.

**2.** Procédé selon la revendication 1, dans lequel l'algorithme d'apprentissage automatique est un réseau neuronal de convolution structuré.

**3.** Système informatique (500), comprenant :

un ou plusieurs processeurs (502) ; et
une mémoire (506) ;
dans lequel un ou plusieurs programmes sont stockés dans la mémoire (506) et sont configurés pour être exécutés par les un ou plusieurs processeurs (502), les un ou plusieurs programmes incluant des instructions qui, lorsqu'elles sont exécutées par les un ou plusieurs processeurs (502), forcent le système (500) à mettre en œuvre le procédé selon la revendication 1 ou 2.

**4.** Un ou plusieurs programmes comprenant des instructions qui, lorsqu'elles sont exécutées par un dispositif électronique muni d'un ou de plusieurs processeurs (502) et d'une mémoire (506), forcent le dispositif à mettre en œuvre le procédé selon la revendication 1 ou 2.

**5.** Support de stockage lisible par ordinateur non transitoire stockant les un ou plusieurs programmes selon la revendication 4.

FIG. 1

EP 3 935 419 B1

| Data | Signal | Noise |
|------|--------|-------|
|      |        |       |

Noise Attenuation of 12 dB

FIG. 2

FIG. 3

FIG. 4

$$|D(\omega, k)|^2 \longrightarrow \bigcirc\!-\!-\! \longrightarrow |S(\omega, k)|^2 \longrightarrow \boxed{\text{Structured CNN}} \longrightarrow \Phi_s(\omega, k)$$

$$\Phi_n(\omega, k)$$

FIG. 5A

$$|N_i(\omega, k)|^2 \longrightarrow \bigcirc\!-\!-\! \longrightarrow |S(\omega, k)|^2 \longrightarrow \boxed{\text{Structured CNN}} \longrightarrow \Phi_s(\omega, k) \approx 0$$

$$\Phi_n(\omega, k)$$

FIG. 5B

EP 3 935 419 B1

Data      Signal      Noise

Noise Attenuation of 26 dB

FIG. 6

FIG. 7

EP 3 935 419 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A Seismic Shift in Scalable Acquisition Demands New Processing: Fiber-Optic Seismic Signal Retrieval in Urban Areas with Unsupervised Learning for Coherent Noise Removal. **MARTIN EILEEN R et al.** IEEE SIGNAL PROCESSING MAGAZINE. IEEE SERVICE CENTER, 01 March 2018, vol. 35, 31-40